# EUROPÄISCHE PATENTSCHRIFT

(11) **EP 0 968 501 B1**
(45) Veröffentlichungstag und Bekanntmachung des Hinweises auf die Patenterteilung: **28.04.2004**
(21) Anmeldenummer: 98916960.2
(22) Anmeldetag: 16.03.1998
(51) Int. Cl.: H01B 3/42

(54) **TRÄNK-, VERGUSS- UND ÜBERZUGSMASSEN FÜR ELEKTROTECHNISCHE UND/ODER ELEKTRONISCHE BAUTEILE SOWIE FÜR TRÄGERMATERIALIEN FÜR FLÄCHIGE ISOLIERSTOFFE**
IMPREGNATING, CASTING AND COATING COMPOUNDS FOR ELECTROTECHNICAL AND/OR ELECTRONIC COMPONENTS AND FOR CARRIER MATERIALS FOR PLANE INSULATING MATERIALS
PRODUITS D'IMPREGNATION, DE MOULAGE ET DE REVETEMENT POUR COMPOSANTS ELECTROTECHNIQUES ET/OU ELECTRONIQUES ET POUR MATERIAUX SUPPORTS POUR MATIERES ISOLANTES PLANES

(30) Priorität: 19.03.1997 DE 19711410
(43) Veröffentlichungstag der Anmeldung: 05.01.2000
(73) Patentinhaber: Altana Electrical Insulation Gmbh, 46483 Wesel (DE)
(72) Erfinder: BLUM, Rainer, D-67069 Ludwigshafen (DE); EICHHORST, Manfred, D-22113 Oststeinbek (DE); HEGEMANN, Günter, D-22301 Hamburg (DE); LIENERT, Klaus-Wilhelm, D-22763 Hamburg (DE)
(74) Vertreter: Fitzner, Ulrich, Dr.
(86) Internationale Anmeldenummer: PCT/EP1998/001513
(87) Internationale Veröffentlichungsnummer: WO 1998/041994

(56) Entgegenhaltungen:
- WO-A-92/14764
- CHEMICAL PATENTS INDEX, DOCUMENTATION ABSTRACTS JOURNAL Week 9719 6. Juni 1997 Derwent Publications Ltd., London, GB; AN 97-209364 XP002073712 "Curable resin composition with rapid curability for sealant or adhesive - comprises unsaturated polyester resin, vinyl ether monomer and radical-forming polymerisation initiator for improved cured film properties." & JP 09 059 329 A (NIPPON SYNTHETIC CHEM IND CO) , 4. März 1997

## Beschreibung

Gegenstand der vorliegenden Erfindung ist die Verwendung von ungesättigten Polyesterharzen als Tränk-, Verguß- und Überzugsmassen für elektrotechnische und/oder elektronische Bauteile sowie für Trägermaterialien für flächige Isolierstoffe.

Unter Tränk-, Verguß- und Überzugsmassen werden gemäß vorliegender Anmeldung Harzmassen verstanden, die in der Elektrotechnik nach den allgemein bekannten Verfahren der Tauchtränkung, Träufeltechnik, dem Tauchrollierverfahren, dem Überflutungsverfahren und dem Verguß zur Tränkung von Wicklungen o.ä. angewendet werden, wobei diese Verfahren ggf. durch Anwendung von Vakuum und/oder Druck unterstützt werden. Auch die Imprägnierung von Trägermaterialien für flächige Isolierstoffe, wie Glasseiden, Glimmerbänder und andere saugfähige Stoffe sowie Kombinationen hiervon werden unter diesem Begriff verstanden, wobei ggf. die Härtung im B-Zustand abgebrochen werden kann, um härtbare Prepregs zu erhalten.

Die Wicklungen elektrischer Maschinen werden üblicherweise durch Tränken imprägniert. Die Aufgabe dieser Imprägnierung ist, eine mechanische Verfestigung der Wicklung herbeizuführen, damit die Wicklung mechanische und elektromechanische Kräfte aufnehmen kann, damit die Wicklung vor äußeren schädlichen Einflüssen, wie beispielsweise die Ablagerung von Staubpartikeln, Kollektorabrieb, Feuchtigkeit, Salzen und Lösemitteln, geschützt ist, damit mechanische Beschädigungen durch, beispielsweise vom Lüfter angesaugte, Partikel verhindert werden und damit die beim Betrieb der elektrischen Maschinen entstehende Erwärmung durch ohmsche und dielektrische Verluste aus der Wicklung an die umgebenden Kühleinrichtungen abgeführt werden kann, was zu einer Erhöhung der Lebensdauer des elektrischen Geräts beiträgt.

Die Imprägnierung dieser Wicklungen oder auch die Beschichtung/Imprägnierung anderer elektrotechnischer bzw. elektronischer Bauteile erfolgt üblicherweise mittels zu Duroplasten härtender Lacke oder Harze. Da einerseits die Anforderungen an die thermische Dauerbeständigkeit dieser Duroplasten sehr hoch sind, andererseits auch die oben angeführten Eigenschaften, insbesondere die elektrische Isolierfähigkeit, gegeben sein müssen, gibt es eine Reihe von Lacken und Harzen, die auf die spezifischen Anwendungsbereiche abgestimmt sind.

Bei den lösemittelhaltigen Lacken, deren Lösemittelanteil vor dem Aushärtevorgang entfernt werden muß, ist die Durchimprägnierung der elektrischen Wicklungen bei einmaliger Anwendung in der Regel schlecht. Dadurch wird die schon angesprochene Abführung ohmscher und dielektrischer Verlustwärmen aus dem Inneren der Wicklungen behindert. Darüber hinaus erfordert das Entfernen des Lösemittels oftmals lange Vorwärmzeiten und komplizierte Temperaturführungen bei der Aushärtung des Lacks. Weiterhin sind bei den lösemittelhaltigen Lacken aufwendige Anlagen zur Abluftreinigung notwendig, da ansonsten eine beträchtliche Umweltbelastung durch Lösemitteldämpfe erfolgt.

Deshalb wurden die Lacke in der Elektroindustrie, von Sonderfällen abgesehen, durch lösemittelfreie Harze ersetzt. Hier haben sich insbesondere die ungesättigten Polyesterharze breiten Raum erobert, da sie gegenüber anderen duroplastischen Harzsystemen beträchtliche Vorteile aufweisen. So ist es möglich, die geforderten Eigenschaften durch molekulares Maßschneidern der ungesättigten Polyesterharze, wie beispielsweise die Auswahl spezifischer Monomerbausteine oder die Einstellung spezifischer Molekulargewichte, in einem großen Maß zu erfüllen. Weiterhin kann die Reaktivität der ungesättigten Polyesterharze solchermaßen beeinflußt werden, daß kurze und damit kostengünstige Herstellprozesse für Wicklungen elektrischer Maschinen möglich werden.

Besonders bezüglich der Anforderung nach thermischer Dauerbelastbarkeit weisen die ungesättigten Polyesterharze, insbesondere die ungesättigten Polyesterimidharze, herausragende Eigenschaften auf

Im allgemeinen sind die ungesättigten Polyesterharze aufgebaut zum einen aus Basisharzen, bestehend beispielsweise aus alpha,beta-ungesättigten Dicarbonsäuren, weiteren modifizierenden Mono-, Di- und/oder Polycarbonsäuren, Diund/oder Polyolen und im Falle der Polyesterimide aus imidgruppenhaltigen hydroxylgruppen- und carboxylgruppenhaltigen Bausteinen, und zum anderen aus Comonomeren, die mit den alpha, beta-ungesättigten Dicarbonsäureeinheiten des Basisharzes reagieren und zu Duroplasten führen können. Als Comonomer bevorzugt ist Styrol, das wegen seiner guten Löseeigenschaften auch zur Einstellung der Verarbeitungsviskosität verwendet wird. Die Comonomere werden bei der Härtung unter geeigneten Bedingungen vollständig copolymerisiert. Man bezeichnet ein solches lösemittelfreies System als Tränkharz. Wie bei den Tränklacken auch kommt es wegen der Dampfdrucke der Comonomeren bei Applikationstemperatur zu Verdampfunasverlusten, die allerdings im allgemeinen geringer als bei lösemittelhaltigen Systemen sind (50%, bezogen auf eingesetzte Menge an Lösemittel, Verdampfungsverlust bei lösemittelhaltigen Tränklacken, 10 bis 30% Verdampfungsverlust bei Tränkharzen).

Trotzdem ist auch bei einer Anwendung von Tränkharzen auf Basis ungesättigter Polyester eine aufwendige Reinigung der Abluft notwendig, wobei aber die Reinigungskapazitäten solcher Abluftanlagen geringer ausgelegt werden können als bei Anwendungen von Tränklacken, da durch geeignete Harzeinstellungen und Verfahrensanpassungen die Monomerenverluste reduziert werden können.

Die Verwendung anderer Harzsysteme, wie beispielsweise Epoxidharze, hat zum Nachteil, daß lange Härtungszeiten erforderlich sind, daß die Möglichkeiten zur Anpassung der Verarbeitungseigenschaften an die Fertigungprozesse, ohne gravierende Einbußen bei den dielektrischen Eigenschaften zu erleiden, gering sind, sowie daß einige Harzbestandteile, wie beispielsweise bei den Epoxidharzen die thermisch hochbeständigen cycloaliphatische Typen bzw. bei den Härtungsmitteln die Amine, eine hohe Toxizität aufweisen können.

In der nicht vorveröffentlichten Deutschen Patentanmeldung P 195 425 64.2 ist nun ein Verfahren zur Imprägnierung von elektrisch leitenden Substraten beschrieben, bei dem radikalisch härtende Harzsysteme eingesetzt werden, die neben einem radikalisch zu Duroplasten härtbaren Harz, Härter und ggf. Beschleuniger noch ggf. comonomerenfreie Vinylether enthalten können. Nähere Angaben über geeignete Vinylether sind in dieser Schrift jedoch nicht enthalten.
Aus den nicht vorveröffentlichten Deutschen Patentanmeldungen P 196 00 136.6 und P 196 00 137.4 sind ferner lösungsmittelfreie Überzugsmassen bekannt, die Polyester mit Dihydrodicyclopentadiengruppen als Endgruppen enthalten. Diese Überzugsmassen gemäß der Deutschen Patentanmeldung P 196 00 136.6 werden zur Beschichtung oder zum Bedrucken von Metallcontainern und die Überzugsmassen gemäß der Deutschen Patentanmeldung P 196 00 137.4 insbesondere als Druckfarben eingesetzt.

Ferner ist aus den nicht vorveröffentlichten Deutschen Patentanmeldungen P 196 00 149.8 und P 197 07 492.8 die Verwendung von Polyesterharzen mit Dihydrodicyclopentadien-Endgruppen als Tränk-, Verguß- und Überzugsmassen für elektrotechnische und elektronische Bauteile bekannt. Die Mitverwendung von Vinylethern in den Harzmassen ist in diesen Anmeldungen nicht beschrieben.

Die DE-A-31 07 450 beschreibt ungesättigte Polyester mit Oligomeren des Dicyclopentadiens als Endgruppen, die als Lösungen in ethylenisch ungesättigten Monomeren zur Herstellung von Formkörpern und Überzügen verwendet werden. Die als Reaktivverdünner eingesetzten ethylenisch ungesättigten Monomeren sind im allgemeinen problematisch wegen ihres hohen Dampfdrucks bei Raum- und Verarbeitungstemperatur und der damit verbundenen Emissionsprobleme.

Die EP-A-0 101 585 beschreibt ungesättigte Polyesterharze, die durch Addition von Cyclopentadien an die Doppelbindungen der ungesättigten Einheiten des Polyesters modifiziert und dann in Vinylmonomeren als Reaktivverdünner gelöst werden. Wiederum problematisch aus ökologischer und toxikologischer Sicht ist der Einsatz von Vinylmonomeren als Reaktivverdünner.

Aus der EP-A-623 660 sind radikalisch härtbare Überzugsmassen bekannt, die ungesättigte Polyesterharze, gelöst in Vinyletherverbindungen mit einem mittleren Molekulargewicht von 72 bis 1.000 enthalten. Die Verwendung Polyestern mit

Dihydrodicyclopentadien-Einheiten ist jedoch nicht beschrieben. Außerdem werden die Überzugsmassen gemäß EP-A-623 660 als Möbellack verwendet. Die in der EP-A-623 660 zwingend vorgeschriebene Mitverwendung von Wachsen macht außerdem die Beschichtungsmittel wegen Störungen der Homogenität im Bauteil für Elektroisolieranwendungen unbrauchbar.

Schließlich sind aus der US-A-5,252,682 Harzmassen bekannt, die Polyester mit Dihydrodicyclopentadien-Einheiten, monomere Vinylether, wie z.B. Triethylenglykoldivinylether und Dimethanolcyclohexandivinylether, und kationischen Initiator enthalten. Angaben über Einsatzzwecke dieser Harzmassen sind in der US-A-5,252,682 jedoch nicht beschrieben. Insbesondere sind keine Hinweise auf die Verwendung dieser Harzmassen im Bereich der Beschichtung elektrischer/elektronischer Bauteile enthalten. Die dort beschriebenen Harzmassen sind außerdem für dieses Einsatzgebiet wenig geeignet, da die in den gehärteten Massen verbleibenden Spaltprodukte der metallischen, kationischen Initiatoren die dielektrischen Eigenschaften der gehärteten Massen inakzeptabel verschlechtern.

Aus der WO 92/14764 und EP 0 332 808 sind Harzmassen enthaltend ungesättigte Polyesterharze und Vinylether bekannt. Dort wird jedoch nicht offenbart, diese für Tränk, als Tränk-, Verguß- und Überzugsmassen für elektrotechnische und/oder elektronische Bauteile sowie für Trägermaterialien für flächige Isolierstoffe einzusetzen. Darüber hinaus enthalten die Zusammensetzungen der WO 92/14764 in jedem Falle zwingend Vinylpyrrolidon. Die Harze der EP 0 332 808 beinhalten in jedem Falle niedermolekulare Vinylether.

Der vorliegenden Erfindung liegt somit die Aufgabe zugrunde, Tränk-, Vergußund Überzugsmassen für elektrotechnische und/oder elektronische Bauteile sowie für Trägermaterialien für flächige Isolierstoffe zur Verfügung zu stellen, die die obengenannten Nachteile des Standes der Technik nicht aufweisen. Insbesondere sollten diese Massen daher emissionsarm aushärtbar sein und möglichst als monomerfrei kennzeichenbar sein. Diese Massen sollten aber dennoch eine möglichst. hohe Reaktivität aufweisen, um in kurzen Zeiten bei nicht zu hohen Härtungstemperaturen aushärtbar zu sein, so daß Zersetzungserscheinungen in den Harzen sowie Beschädigungen an den Werkstoffen vermieden werden. Außerdem dürfen diese Massen bei den Verarbeitungs- und Härtungsbedingungen nicht in nennenswertem Umfang Spaltprodukte freisetzen.

Diese Aufgabe wird überraschenderweise dadurch gelöst, daß eine Harzmasse (A) eingesetzt wird,die
A1) mindestens ein ungesättigtes Polyesterharz,
A2) mindestens einen oligomeren und/oder polymeren Vinylether mit einer Viskosität von weniger als 4000 mPas bei 25 °C,
A3) ggf. mindestens ein weiteres Polymer und/oder Oligomer,
A4) ggf. mindestens einen Härtungsbeschleuniger,
A6) gegebenenfalls weitere übliche Additive, ausgenommen ethylenisch ungesättigte Reaktivverdünner,
enthält.

Im folgenden werden nun die einzelnen Komponenten der Harzmasse näher erläutert:

### Polyesterkomponente (A1)

Als Komponente (A1) enthalten die erfindungsgemäß verwendeten Harzmassen einen oder mehrere ungesättigte Polyester, die ggf. imidgruppenhaltige Bausteine aufweisen. Ungesättigte Polyesterharze sind dabei prinzipiell bekannt. Imidgruppenhaltige ungesättigte Polyesterharze sind beispielsweise in DE-A-15 70 273, DE-A-17 20 323 und DE-A-24 60 768 beschrieben.

Die ungesättigten Polyester werden in bekannter Weise aus di- und/oder polyfunktionellen Carbonsäuren und di- und/oder polyfunktionellen Alkoholen, ggf. zusammen mit Monocarbonsäuren und/oder Monoalkoholen hergestellt.

Geeignete Polycarbonsäuren sind neben der bevorzugt eingesetzten Maleinund/oder Fumarsäure beispielsweise Phthalsäure, Isophthalsäure, Terephthalsäure, Tetrahydro- und/oder Hexahydrophthalsäure, Endomethylentetrahydrophthalsäure, Malonsäure, Bernsteinsäure, Adipinsäure, Korksäure, Glutarsäure, Sebacinsäure, Azelainsäure, Trimellithsäure, Pyromellithsäure, Di- und/oder Polycarbonsäuren mit ethylenischen ungesättigten Struktureinheiten, wie beispielsweise Itaconsäure und Citraconsäure, ein- oder mehrfach ungesättigte Fettsäuren, wie z.B.

Kokosnußöl-, Erdnußöl-, Ricinus-öl-, Holzöl-, Sojabohnenöl-, Leinöl-, Baumwollsaatöl- oder Safflorölfettsäuren, bzw. die Anhydride der genannten Polycarbonsäuren, sofern synthetisierbar.

Selbstverständlich können anstelle der freien Säuren auch die entsprechenden Ester mit niedrigen Alkoholen oder mit Allylalkohol oder anderen Alkoholen teilveresterte Di- und/oder Polycarbonsäuren, wie z.B. Trimellithsäuremonoallylester und Pyromellithsäurediallylester, eingesetzt werden.

Geeignete Diole zur Herstellung der Polyester sind beispielsweise Ethylenglykol, Propandiole, Butandiole, Hexandiole, Allylalkohol, Hydroxypivalinsäureneopentylglykolester, Neopentylglykol, Diethylenglykol, Cyclohexandiol, Cyclohexandimethanol, Trimethylpentandiol und Ethylbutylpropandiol. Ferner sind auch aliphatische Polyetherdiole, wie lineare oder verzweigte Poly(oxyethylen)glykole, Poly(oxypropylen)glykole und/oder Poly(oxybutylen)glykole und gemischte Polyetherdiole wie Poly(oxyethylenoxypropylen)glykole geeignet. Die Polyetherdiole haben üblicherweise eine Molmasse Mn von 400 bis 3000.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität, hydrierte Bisphenole usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Beispiele für geeignete Polyole sind Ditrimethylolpropan, Trimethylolethan, Trimethylolpropan, Glycerin, Pentaerythrit, Homopentaerythrit, Dipentaerythrit, Trishydroitiethylisocyanat, 1,2,4 Butantriol, Propan- und Hexan-Triole, Trihydroxycarbonsäuren, wie Trishydroxymethyl(ethyl)ethansäuren, Trimethylolethanmonoallylether, Trimethylolpropanmonoallylether, Trimethylolethandiallylether, Trimethylolpropandiallylether, Pentaerythritmonoallylether, Pentaerythritdiallylether. Die Polyole mit mindestens 3 OH-Gruppen können allein oder als Gemisch eingesetzt werden. Gegebenfalls können die Triole zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen eingesetzt werden.
Weiterhin können als Di- und/oder Polyolbausteine oligomere und/oder polymere Di- und/oder Polyole eingesetzt werden, wie beispielsweise: hydroxylgruppenmodifizierte Polybutadiene, hydroxylgruppenhaltige Polyurethane oder hydroxylgruppenhaltige Epoxidharze.

Zur Herstellung der Polyester geeignet sind auch Verbindungen, die eine gegenüber den funktionellen Gruppen des Polyesters reaktive Gruppe aufweisen. Als modifizierende Komponente können Diepoxidverbindungen, gegebenenfalls auch Monoepoxidverbindungen verwendet werden. Geeignete Komponenten sind beispielsweise in der DE-A-40 24 204 auf Seite 4, Zeilen 4 bis 9, beschrieben. Geeignet sind auch ungesättigte Glycidylverbindungen, wie z.B. Undecensäureglycidylester, (Meth)Acrylierungsprodukte von Epoxidharzen, Allylglycidether, Vinylgiycidether und bevorzugt Glycidyl(meth)acrylat. Diese Glycidylverbindungen können bei der Synthese mitverwendet werden oder - bevorzugt - nachträglich addiert werden.

Zur Herstellung der Polyester geeignet sind auch Verbindungen, die außer einer gegenüber den funktionellen Gruppen des Polyesters reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Durch die (Mit)verwendung di- und/oder polyfunktioneller Amine, wie beispielsweise Ethylendiamin, Propylendiamin-1,2 und -1,3, Hexamethylendiamin, Phenylendiamin oder Melamin, können auch Polyester mit Amidgruppen erhalten werden.

Zur Regelung des Molekulargewichts der erfindungsgemäßen Polyester können monofunktionelle Verbindungen, wie z.B. Alkohole, wie beispielsweise Butanol, Hexanol oder auch (Oligo)dihydrodicyclopentadienol, monofunktionelle Amine, wie beispielsweise Propylamin oder Anilin, sowie monofunktionelle Carbonsäuren, wie beispielsweise Essigsäure oder Benzoesäure, eingesetzt werden.

Die Herstellung der Polyester (A) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure, hydrophosphorige Säure und ähnlichen. Bevorzugt werden nichtmetallische Katalysatoren eingesetzt.

Üblicherweise wird die Herstellung der Polyester in Gegenwart geringer Mengen eines geeigneten Lösungsmittels als Schleppmittel durchgeführt. Als Schleppmittel werden z. B. aromatische Kohlenwasserstoffe, wie insbesondere Xylol, und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Die Synthese von erfindungsgemäßen Polyestern, die speziellen Anforderungen genügen, wie beispielsweise an Härte, Elastizität oder Verarbeitungsviskosität, erfolgt nach dem Fachmann bekannten Regeln. So kann beispielsweise die Elastizität der Polyester durch die Kettenlänge der eingebauten Polyole und/oder Polycarbonsäuren zwischen den Ester-Verknüpfungspunkten variiert werden: z.B. sind Polyester mit Hexandiol- und/oder Adipinsäure-Bausteinen elastischer als Polyester mit Ethylenglykol- und/oder Phthalsäure-Bausteinen.

Weiterhin ist dem Fachmann bekannt, daß durch den Einbau tri- oder mehrfunktioneller Polyole und/oder Polycarbonsäuren und die damit verbundene Einführung von Verzweigungspunkten im Polyestermolekül, die Eigenschaften, insbesondere die Viskosität, der Polyesterharze maßgeblich beeinflußt werden kann.

Besonders bevorzugt werden als Komponente (A1) ungesättigte Polyester eingesetzt, die als Struktureinheiten Dihydrodicyclopentadienyl-Einheiten der Formel (I) und/oder Oligodihydrodicyclopentadienyl-Einheiten der Formel (II) enthalten: 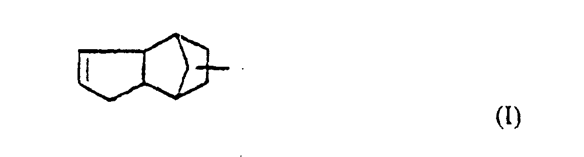 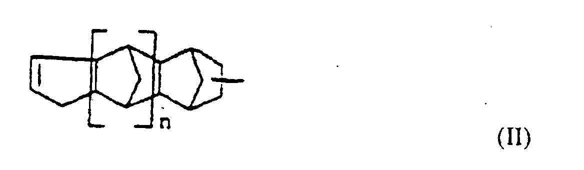 mit n = 1 bis 10.

Vorzugsweise sind die Dihydrodicyclopentadienyl-Einheiten und/oder die Oligodihydrodicyclopentadienyl-Einheiten Ester des Dihydrodicyclopentadienols gemäß Formel (III) oder Ester des Oligodihydrodicyclopentadienols gemäß Formel (IV): 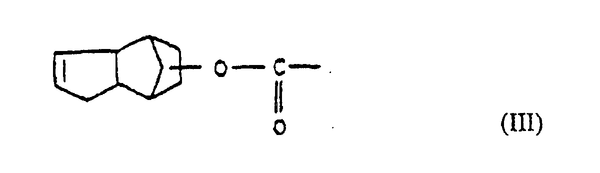 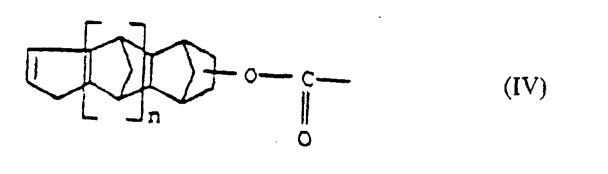 mit n = 1 bis 10.

Besonders bevorzugt sind als Dihydrodicyclopentadien-Einheiten und/oder als Oligodihydrodicyclopentadien-Einheiten Halbester des Dihydrodicyclopentadienols mit Maleinsäure und/oder Fumarsäure gemäß Formel (V) oder Halbester des Oligodihydrodicyclopentadienols mit Maleinsäure und/oder Fumarsäure gemäß Formel (VI): 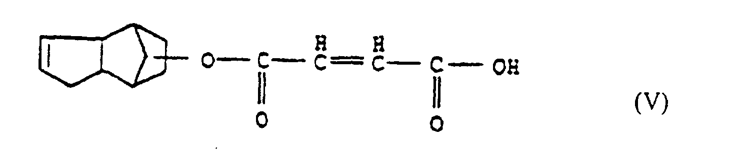 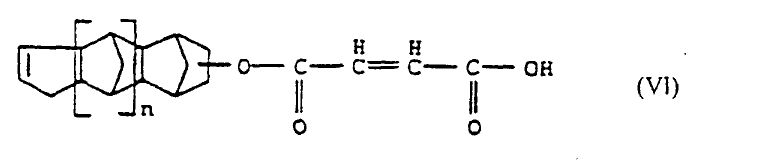 mit n = 1 bis 10.
Die Dihydrodicyclopentadienyl- und die Oligodihydrodicyclopentadienyl-Struktureinheiten der Formeln (I) bis (VI) leiten sich allesamt vom Ausgangsstoff Dicyclopentadien ab, das seinerseits ein Dimerisierungsprodukt des Cyclopentadien ist (zur Synthese des Cyclopentadien vergleiche beispielsweise Ullmanns Enzyklopädie der technischen Chemie, 4.Aufl., Band 9, Seiten 699 bis 704, Verlag Chemie, Weinheim, 1975).

Das Cyclopentadien dimerisiert spontan bei Raumtemperatur zu Dicyclopentadien. Bei Temperaturen oberhalb 100 °C, vorzugsweise bei Temperaturen zwischen 170 und 300 °C und unter Druck, reagiert Cyclopentadien mit sich selbst über Dicyclopentadien als Zwischenstufe zu Oligodicyclopentadien nach dem Mechanismus der Diels-Alder-Reaktion. Bei Zusatz von Katalysatoren, wie beispielsweise die Halogenide von Aluminium, Antimon, Bor, Eisen, Wismut oder Zinn, polymerisiert Cyclopentadien in Abwesenheit von Sauerstoff zu Polycyclopentadien mit Molekulargewichten bis über 10.000 Dalton.

Die in den erfindungsgemäßen Überzugsmassenn anwesenden Dihydrodicyclopentadien- und/oder Oligodihydrodicyclopentadien-Einheiten lassen sich auf das entprechende Dihydrodicyclopentadienol der Formel (VII): 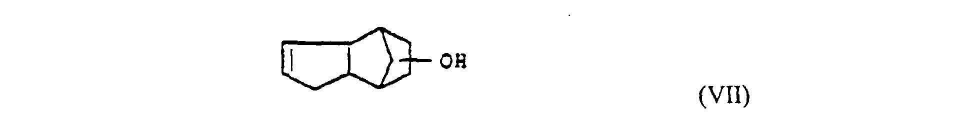 oder auf das entsprechende Oligodihydrodicyclopentadienol der Formel (VIII): 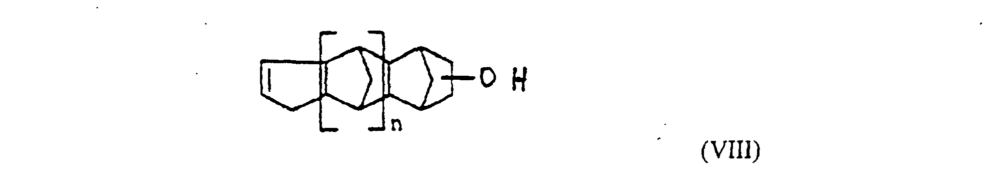 mit n = 1 bis 10 zurückführen.

Die Verbindungen der Formeln (VII) und (VIII) sind beispielsweise aus Dicyclopentadien bzw. Oligodicyclopentadien durch, gegebenenfalls säurekatalysierte Anlagerung von Wasser zugänglich und kommerziell verfügbar.

Bei der Herstellung der erfindungsgemäßen Bindemittel können die (Oligo)dihydrodicyclopentadienole der Formeln (VII) und (VIII) auch für sich allein genommen als Syntesebaustein eingesetzt werden.

Die Struktureinheiten der Formeln (III) und (IV) sind vorzugsweise erhältlich durch Umsetzung des Dicyclopentadiens bzw. des Oligodicyclopentadiens mit Säuren, bevorzugt mit Carbonsäuren, besonders bevorzugt mit Polycarbonsäuren. Ganz besonders bevorzugt als Säure wird Malein- und/oder Fumarsäure in solchen

Mengen eingesetzt, daß die entsprechenden Halbester der Formeln (V) und (VI) als Struktureinheiten erhalten werden. Zur Herstellung der Synthesebausteine gemäß den Formeln (III) bis (VI) wird bevorzugt das Dicyclopentadien bzw das Oligodicyclopentadien mit der (Poly)carbonsäure in Gegenwart von Wasser bei vorzugsweise erhöhter Temperatur umgesetzt.

Selbstverständlich können die estergruppenhaltigen Strukturbausteine (III) bis (VI) auch durch die Umsetzung des entsprechenden Dihydrodicyclopentadienols (VII) bzw. des entsprechenden Oligodihydrodicyclopentadienols (VIII) mit Säuren, bevorzugt mit Carbonsäure, besonders bevorzugt mit Polycarbonsäuren und ganz besonders bevorzugt mit Malein- und/oder Fumarsäure, erhalten werden.

In einer weiteren Ausführungsform der Erfindung werden die erfindungsgemäß eingesetzten Bindemittel folgendermaßen hergestellt:

In einer ersten Stufe wird ein Polyesterharz, Polyesteramidharz oder Polyesterimidharz (Präpolyester) synthetisiert, das keine Struktureinheiten der Formel (I) und der Formel (II), dafür aber einen Überschuß an freien Säurengruppen, bedingt durch ein spezifisches Verhältnis von Hydroxyl- zu Säuregruppen während der Polyestersynthese, aufweist. In der folgenden Stufe wird der Präpolyester mit Dicyclopentadien, ggf. in Anwesenheit von Katalysatoren polymeranalog zu den Polyestern mit den Struktureinheiten der Formeln (I) und/oder (II) umgesetzt. Bei ungesättigten Präpolvestern mit ethylenisch ungesättigten Doppelbindungen tritt als Nebenreaktion die Addition von Cyclopentadien an die Doppelbindungen auf, was beispielsweise bei Maleinsäureeinheiten zu der Bildung von Endomethylentetrahydrophthalsäure-Struktureinheiten führt.

Es kann auch erwünscht sein, die Oligodihydrodicyclopentadien-Strukturen der Formel (II) in höheren Anteilen einzuführen, um z.B. die Härte der fertigen Produkte zu erhöhen.

Die Komponente (A1) wird in den erfindungsgemäß eingesetzten Harzmassen bevorzugt in einer Menge von 5 bis 95 Gew.-%, besonders bevorzugt von 30 bis 80 Gew.-% und ganz besonders bevorzugt von 40 bis 70 Gew.-%, jeweils bezogen auf das Gesamtgewicht der Harzmasse, eingesetzt.

### Vinyletherkomponente (A2)

Es ist erfindungswesentlich, daß die erfindungsgemäß eingesetzten Harzmassen als Komponente (A2) einen oder mehrere oligomere und/oder polymere Vinylether mit einer Viskosität bei 25 °C von weniger als 4.000 mPa.s, bevorzugt weniger als 2.000 mPa.s, besonders bevorzugt weniger als 100 mPa.s, enthalten. Bevorzugt weisen die als Komponente (A2) eingesetzten Vinylether außerdem ein zahlenmittleres Molekulargewicht von mehr als 72 bis weniger als 4.000, bevorzugt von mehr als 250 bis weniger als 2.000, besonders bevorzugt von 300 bis weniger als 1.000, auf. Durch den Zusatz dieser Vinylether wird üblicherweise einerseits die Viskosität der Harzmassen reduziert und andererseits die Reaktivität erhöht.

Bevorzugt werden als Komponente (A2) Vinylether eingesetzt, die bei 25 °C einen sehr niedrigen Dampfdruck aufweisen, bevorzugt einen Dampfdruck bei 25 °C von weniger als 5 mbar, besonders bevorzugt von weniger als 1 mbar und ganz besonders bevorzugt von weniger als 0,2 mbar.

Es werden daher oligomere und/oder polymere Vinylether eingesetzt. Diese Stoffe weisen i.a. den gewünschten niedrigen Dampfdruck auf und sind keine gefährlichen Arbeitsstoffe und erfüllen die gesetzlichen Vorschriften für Polymere (vgl. z.B. Amtsblatt der EU vom 5.6.92, Nr. L 154/3).

Als Beispiele für geeignete oligomere und/oder polymere Vinylether seien folgende Verbindungen genannt: Polyethylenglykolmono- und Polyethylenglykoldivinylether, Polypropylenglykolmono- und Polypropylenglykoldivinylether, Monoalkylpolyethylenglykolmonovinylether, Monoalkylpolypropylenglykolmonovinylether, Polytetrahydrofuranmono- und Polytetrahydrofurandivinylether, Monoalkylpolytetrahydrofuranmonovinylether, Vinylether von oxalkylierten verzweigten Polyolen wie oxalkyliertem Trimethylolpropan oder oxalkyliertem Pentaerythrit.

Die Vinylether werden in den Harzmassen in einer solchen Menge eingesetzt, daß die jeweils gewünschte Verarbeitungsviskosität und die gewünschte Lichtempfindlichkeit erreicht wird. Sie werden daher üblicherweise in einer Menge von 1 bis 70 Gew.-%, bevorzugt 5 bis 50 Gew.-%, besonders bevorzugt 10 bis 40 Gew.-%, eingesetzt, wobei die Gew.-%-Angaben jeweils auf das Gesamtgewicht der Harzmasse bezogen sind.

### Weiteres Polymer (A3)

Bevorzugt enthalten die erfindungsgemäß eingesetzten Harzmassen noch ein oder mehrere weitere Polymere und/oder Oligomere. Geeignet sind dabei insbesondere Polymere und/oder Oligomere, die bei den gegebenen Härtebedingungen reaktiv sind. Geeignet sind aber auch solche Verbindungen, die nicht reaktiv sind. Ferner sind als Komponente (A3) auch die sogenannten organischen Füllstoffe und/oder organischen Weißpigmente geeignet.

Besonders bevorzugt werden als Komponente (A3) von der Komponente (A1) verschiedene Verbindungen eingesetzt, die ebenfalls die

Dihydrodicyclopentadien-Struktur-Einheiten der Formel (I) und/oder die Oligodihydrodicyclopentadien-Struktur-Einheiten der Formel (II) aufweisen.

Solche als Komponente (A3) bevorzugt eingesetzten Stoffe leiten sich ab von monofunktionellen Alkoholen oder polyfunktionellen Hydroxyverbindungen mit mehr als zwei Hydroxylgruppen pro Molekül, die ganz oder z.T mit Monocarbonsäuren der Formeln (V) und/oder (VI) verestert sind, die aber auch teilweise mit anderen Stoffen verestert oder verethert sein können.

Weiter lassen sich die als Komponente (A3) geeigneten Stoffe ableiten von monofunktionellen oder polyfunktionellen Aminverbindungen, die mit Monocarbonsäuren der Formeln (V) und/oder (VI) ganz oder aber auch teilweise zu Amiden oder Salzen umgesetzt sind.

Weiter lassen sich die als Komponente (A3) geeigneten Stoffe ableiten von monofunktionellen oder polyfunktionellen Epoxidverbindungen, die mit Monocarbonsäuren der Formeln (V) und/oder (VI) ganz oder aber auch teilweise umgesetzt sind.

Für als Komponente (A3) geeignete Stoffe seien beispielhaft genannt die Ester von Verbindungen der Formel (V) und/oder (VI) mit Mono- und Polyalkoholen, wie Butanol, Hexanol, Butandiol, Hexandiol, Polyethylenglykolmonoalkylether, Polypropylenglykolmonoalkylether, Trimethylolpropan, Pentaerythrit oder noch höher funktioneller Hydroxylverbindungen oder hydroxylfunktionellen Dienölen. Geeignete Polyole zur Veresterung mit Stoffen der Formeln (V) und/oder (VI) sind auch hydroxylfunktionelle gesättigte Polyester. Weiter können die als Komponente (A3) geeigneten Stoffe erhalten werden aus carboxyfunktionellen gesättigten Polyestern oder anderen mit Hydroxylgruppen reaktiven mono- oder polyfunktionellen Verbindungen, die mit (Oligo)Dihydrodicyclopentadienylalkohol der Formeln (VII) und/oder (VIII) umgesetzt werden. Von besonderer Bedeutung sind auch die Ester der Ethoxylierungs- und Propoxylierungsprodukte von Hydroxylverbindungen sowie Polyester- und Polyetherpolyole vom Typ Polyethylenoxid, Polypropylenoxid, Polytetrahydrofuran und Polycaprolacton.

Durch die Art der Alkoxylierungsmittel und den Grad der Alkoxylierung lassen sich auch Eigenschaften der Endprodukte, wie z.B. Härte, Hydrophilie und Elastizität, steuern. Solche Polyole können auch nur z.T. mit Verbindungen der Formeln (V) und/oder (VI) verestert sein, wobei die restlichen Hydroxylgruppen entweder frei bleiben oder mit anderen Stoffen verestert oder verethert sein können oder mit anderen, mit Hydroxylgruppen reaktiven Stoffen umgesetzt sein können.

Hierfür kommen z.B. Isocyanate oder Epoxide in Frage. Weiter sind von Bedeutung hydroxylgruppenhaltige natürliche Öle, wie z.B. Rizinusöl.

Weitere als Komponente (A3) geeignete Stoffe sind auch Addukte von Verbindungen der Formel (V) und/oder (VI) an Epoxide.

Weitere Stoffe der genannten Art sind Umsetzungsprodukte von Carbonsäuren der Formeln (V) und (VI) mit ein- oder mehrwertigen Aminen. Dabei können diese Umsetzungsprodukte salzartige Addukte sein, bevorzugt sind sie jedoch Amide. Beispiele sind die Umsetzungsprodukte von aminofunktionellen Polyethylenoxiden, Polypropylenoxiden oder Dienölen mit Verbindungen der Formel (V) und/oder (VI).

Bevorzugt werden die als Komponente (A3) eingesetzten Verbindungen getrennt hergestellt und dann mit den erfindungsgemäß eingesetzten Polyestern (A1), ggf. Härtungsbeschleunigern (A4), ggf. Reaktivverdünnern (A5) und ggf. Hilfsstoffen (A6) zu gebrauchsfertigen Elektroisoliermassen gemischt. Es ist aber in vielen Fällen auch möglich, durch entsprechende Einstellung der stöchiometrischen Verhältnisse solche Stoffe bei der Polyesterherstellung in situ herzustellen.

Die Komponente (A3) wird in den erfindungsgemäß eingesetzten Harzmassen bevorzugt in einer Menge von 1 bis 80 Gew.-%, besonders bevorzugt von 3 bis 30 Gew.-% und ganz besonders bevorzugt von 5 bis 20 Gew.-%, jeweils bezogen auf das Gesamtgewicht der Harzmasse, eingesetzt.

### Härtungsbeschieuniger (A4)

Die erfindungsgemäß eingesetzten Harzmassen enthalten als Komponente (A4) 0 bis 10 Gew.-%, vorzugsweise 2 bis 5 Gew.-%, bezogen auf das Gesamtgewicht der Harzmasse, Härtungsbeschleuniger zur Katalysierung der radikalischen Polymerisation. Dabei sind die Härtungsbeschleuniger im allgemeinen Verbindungen, die photolytisch und/oder thermisch Radikale zur Initiierung der radikalischen Polymerisation bilden.

Zur photolytischen Initiierung der radikalischen Polymerisation geeignet sind beispielsweise Benzoin, Benzoinether, substituierte Benzoine, Alkylether von substituierten Benzoinen, wie z.B. alpha-Methylbenzoinalkylether oder alpha-Hydroxymethylbenzoinalkylether; Benzile, Benzilketale, wie z.B. Benzildimethylketal oder Benzilmethylbenzylketal; Initiatoren auf Keton-Basis, wie z.B. Acetophenon und seine Derivate, wie Diethoxyacetophenon oder m-Chloracetophenon, Benzophenon und seine Derivate, wie 4,4'-Dimethylaminobenzophenon oder 4,4'-Diethylaminobenzophenon, Propiophenon, Hydroxycyclohexylphenylketon, 2-Hydroxy-2-methyl-1-phenylpropan-1-on; Antrachinon und seine Derivate sowie Thioxanton und seine Derivate sowie auch Mischungen verschiedener Härtungsbeschleuniger.

Dabei können die Härtungsbeschleuniger auch chemisch an die Komponenten der Harzmasse, insbesondere an die Komponente (A1) gebunden sein. Bevorzugt werden die Härtungsbeschleuniger mit H-Akzeptor-Gruppen polymer an die Polyester gebunden verwendet, z.B. durch die Mitverwendung von einkondensierbaren Phenon-, Xanthon- und/oder Thioxanthonverbindungen, wie z.B. Hydroxy- oder Bishydroxybenzophenon oder Benzophenoncarbonsäuren bzw. Benzophenoncarbonsäureestern bei der Polykondensation der Polyesterharze.

Zur thermischen Initiierung der radikalischen Polymerisation geeignet sind beispielsweise an sich bekannte Peroxide, Hydroperoxide, Azoverbindungen, Azide oder thermolabile C-C-Verbindungen, wie beispielsweise hochsubstituierte Ethane.

Eine erhebliche Beschleunigung der Härtung bzw. Absenkung der Härtungstemperatur ist mit Metallcoinitiatoren wie Cobalt- Mangan-, Eisen-, Nickel- oder Bleiverbindungen möglich.

Die Beschichtungen können aber auch thermisch und/oder mittels UV- oder Elektronenstrahlung, bevorzugt UV-Strahlung, ohne Verwendung von Photoinitiatoren ausgehärtet werden.

Weiterhin können bei der Härtung der erfindungsgemäßen Überzugsmassen Gemische aus thermischen und photolytischen Initiatoren eingesetzt werden.

Günstig für eine gute Stabilität der Harzmassen bei der Verarbeitung ist der bevorzugte Einsatz von Stabilisatoren in Kombination mit den Härtungsbeschleunigern. Insbesondere sind dabei die Stabilisatoren vom Typ der Hydrochinone, der Chinone, der Alkylphenole und/oder Alkylphenolether geeignet. Beispiele hierfür sind Hydrochinon, Methylhydrochinon, p-Benzochinon, sekundäre und tertiäre Methylphenole, tertiäre Butylphenole, tertiäre Amylphenole, Octylphenole, butylierte Xylenole und butylierte Kresole.

Dabei ist es insbesondere günstig, die Stabilisatoren als Gemische einzusetzen. Dabei sollten mindestens 2 der angebenen Stabilisatoren eingesetzt werden, damit gewährleistet ist, daß einerseits eine Thermostabilität der Tränkharze bis zu einer Temperatur von 50 °C über längere Zeit gegeben ist und andererseits bei einer Härtungstemperatur oberhalb 100 °C eine Reaktion der Tränkharzmassen nicht mehr verhindert wird. Die Stabilisatoren werden in üblichen Mengen verwendet. Die Gesamtmenge der eingesetzten Stabilisatoren kann beispielsweise 0,005 bis 0,5 Gew.-%, bevorzugt 0,01 bis 0,1, besonders bevorzugt 0,01 bis 0,05 Gew.-%, bezogen auf die Gesamtmasse, betragen. Die Mengenverhältnisse zwischen den Stabilisatoren können in breiten Bereichen variieren, sie können beispielsweise im Falle des Einsatzes von 2 Stabilisatoren bei einem Verhältnis von 1 : 1 bis 20 : 1, bevorzugt 1 : 1 bis 10 : 1 und umgekehrt liegen. Ähnliche Bereiche sind bei einem Einsatz von mehr als 2 Stabilisatoren möglich. Geeignet sind besonders Mischungen von Stabilisatoen vom Chinontyp mit solchen vom Alkylphenoltyp.

### Additive (A6)

Ggf. können die Harzmassen noch übliche Additive (A6) in üblichen Mengen, bevorzugt in einer Menge von 0 bis 20 Gew.-%, besonders bevorzugt 0,5 bis 10 Gew.-%, enthalten.

Als Beispiele für geeignete Verbindungen seien genannt: grenzfächenaktive Stoffe, wie z.B. ionische und nichtionische Tenside sowie Fluortenside, Entschäumer, Weichmacher, wie Phthalate, Adipate und Phosphate, u.ä.

Ggf. können die Harzmassen auch lösliche und unlösliche Farbstoffe in üblichen Mengen enthalten. femer können die Harzmassen ggf. auch Füllstoffe und /oder Pigmente in üblichen Mengen enthalten.
Ausgenommen sind als Additive jedoch ethylenisch ungesättigte Reaktiwerdünner.

### Anwendung der Harzmassen

Die erfindungsgemäßen Tränk-, Verguß- und Überzugsmassen werden nach den in der Elektrotechnik allgemein bekannten Verfahren der Tauchtränkung, Träufeltechnik, dem Tauchrollierverfahren, dem Überflutungsverfahren und dem

Verguß zur Tränkung von Wicklungen o.ä. appliziert. Zu diesen Verfahren ist im einzelnen folgendes auszuführen:
- Das Tränken des zu imprägnierenden Substrats, das ggf. vorgeheizt ist, erfolgt im allgemeinen durch Eintauchen in die flüssige Harzmasse (A), Verweilen des zu imprägnierenden Substrats in der Harzmasse, bis die Harzmasse alle zu imprägnierenden Stellen erreicht hat, ggf. bis zum Gelieren des in das Substrat eingedrungenen Harzes, Austauchen und Abtropfen des imprägnierten Substrats sowie anschließendes Aushärten der aufgenommenen Harzmasse (A).
- Das Träufeln der Harzmasse (A) auf das zu imprägnierende Substrat erfolgt, indem die Harzmasse (A) mittels geeigneter Pumpen auf das ggf. vorgeheizte Substrat aufgeträufelt wird, wobei ggf. (A3) und ggf. (A6) durch geeignete Mischdosiervorrichtungen vor dem Aufträufeln der Harzmasse (A1) zudosiert werden oder wobei die Harzmasse (A) schon vorher durch Zugabe des Härters (A3) aktiviert wird.
- Das Überfluten mit der Harzmasse (A) erfolgt, indem das gegebenenfalls vorgeheizte Substrat durch ein aufsteigendes Bad aus der Harzmasse (A) solchermaßen überflutet wird, daß eine genügende Imprägnierung des Substrats erfolgt, anschließendes Ablassen der Harzmasse A), gegebenenfalls bis zum Gelieren des in das Substrat eingedrungenen Harzes, Abtropfenlassen des Substrats und anschließendes Aushärten der vom Substrat aufgenommenen Harzmasse (A).
- Das Tauchrollieren mit der Harzmasse (A) erfolgt, indem das ggf. vorgeheizte Substrat solchermaßen durch die aktivierte Harzmasse (A) gerollt wird, daß, im Falle von Wicklungen elektrischer Maschinen als Substrat, nur die Wicklung und der die Wicklung tragende Teil des Substrats von der Harzmasse (A) bedeckt werden, bis eine ausreichende Imprägnierung der Wicklung erfolgt ist und anschließendes Aushärten der vom Substrat (von der Wicklung) aufgenommenen Harzmasse, vorzugsweise unter Rotation.
- Das Vergießen der Substrate in wiederverwendbarer oder verlorener Form mit einer voraktivierten Harzmasse (A) oder, unter Verwendung eines geeigneten Mischdosiersystems, durch Zumischen ggf. von (A4) und ggf. (A6) unmittelbar vor dem Vergießen.

Die oben angeführten Imprägnierverfahren können zur Verbesserung der Imprägnierqualität bevorzugt im Vakuum oder auch im Wechsel zwischen Vakuum und Überdruck durchgeführt werden.

Die Vorwärmung der Substrate kann beispielsweise durch Stromwärme (Erwärmung durch elektrischen Widerstand), Induktionsheizung, Mikrowellenoder Infrarotheizung sowie durch Passage eines konventionellen Wärmeofens erfolgen.

Die Härtung der nach der Imprägnierung am Substrat anhaftenden Harzmasse kann thermisch, wie beispielsweise bei der Vorwärmung der Substrate durch Stromwärme, Induktionsheizung, Mikrowellen- oder Infrarotheizung sowie durch Passage eines konventionellen Wärmeofens, oder mittels energierreicher Strahlung, beispielsweise UV- oder Elektronenstrahlung erfolgen. Bevorzugt ist jedoch eine Kombination der thermischen Härtung und der Strahlungshärtung, wobei beide Härtungen gleichzeitig oder in beliebiger Reihenfolge der Energiezufuhr erfolgen können. Die Härtung der inneren Bereiche der Bauteile erfolgt bevorzugt entweder durch weitere Stromzufuhr und/oder durch Nachhärtung im Ofen und die Härtung an der Substratoberfläche wird bevorzugt durch zusätzliche Bestrahlung, beispielsweise IR-, UV- oder Elektronenstrahlung, unterstützt.

Die nachfolgenden Beispiele sollen die Erfindung weiter veranschaulichen. Alle Prozentangaben beziehen sich, soweit nicht anders angeführt, auf Gewichtsprozent.

### Beispiele

### Beispiel 1:

### Herstellung eines ungesättigten Polyesterharzes (A1-1)

312 g Neopentylglykol (3,0 Mol) und 125 g Propylenglykol (1,2 Mol) werden in einer üblichen Labor-Rührapparatur unter Stickstoff auf auf 140 °C erwärmt und in Portionen mit 332 g Isophthalsäure (2,0 Mol) versetzt und dann unter Abdestillieren des Kondensatwassers in 2 Stunden auf 180 °C erhitzt. Dann wird auf 120 °C gekühlt und es werden 232 g Maleinsäureanhydrid (2,0 Mol) zugegeben und in 2 Stunden auf 200 °C erhitzt, wobei in den letzten 30 Minuten Vakuum angelegt wird. Die resultierende Schmelze wird auf Aluminiumfolie ausgegossen und erstarrt zu einem Harz mit einer Säurezahl von 17 mgKOH/g.

### Beispiel 2

### Herstellung einer Komponente (A3-1)

In einem Rührkolben mit Heizung und Rückflußkühler werden 1586,52 g Dicyclopentadien (12,0 Mol) und 1176,72 g Maleinsäureanhydrid (12,0 Mol) eingewogen. Die Mischung wird unter einem leichten Stickstoffstrom auf 125 °C erhitzt und dann werden über einen Tropftrichter in 1 Stunde 226,00 g Wasser (12,0 Mol + 10 g) zugegeben. Es wird bei 125 °C eine Stunde nachreagieren gelassen. Es wird ein Reaktionsgemisch erhalten, das überwiegend eine Monocarbonsäure der Formel (V) enthält. Der Kolbeninhalt wird auf 70 °C abgekühlt, dann werden 715,00 g 1,6-Hexandiol (6,05 Mol), 4,00 g Dibutylzinndilaurat (DBTL) und 0,50 g Hydrochinon zugegeben.

Es wird unter einem leichten Stickstoffstrom rasch auf 120 °C aufgeheizt. Dann wird in 6 Stunden die Temperatur allmählich auf 190 °C erhöht, dabei wird das entstehende Kondensationswasser abdestilliert. Es wird ein viskoses Harz erhalten mit einer Säurezahl von 24 mgKOH/g und einer Viskosität von 3650 mPas bei 50 °C.

### Beispiel 3

### Herstellung einer Komponente (A3-2)

In einem Rührkolben mit Heizung und Rückflußkühler werden 661,10 g Dicyclopentadien (5,0 Mol) und 490,30 g Maleinsäureanhydrid (5,0 Mol) eingewogen. Die Mischung wird unter einem leichten Stickstoffstrom auf 125 °C erhitzt und dann werden über einen Tropftrichter in einer Stunde 95,00 g Wasser (5,0 Mol + 5g) zugegeben. Es wird bei 125 °C eine Stunde nachreagieren gelassen. Es resultiert ein Reaktionsgemisch, das überwiegend eine Monocarbonsäure der Formel (V) enthält. Der Kolbeninhalt wird auf 70 °C abgekühlt und dann werden 1859,00 g TP 200 (5,5 Mol-Aquivalent -OH), 3,00 g Dibutylzinndilaurat (DBTL) und 0,30 Hydrochinon zugegeben. TP 200 ist ein Ethoxylierungsprodukt aus 1 Mol Trimethylolpropan und 20 Mol Ethylenoxid. Es wird wie bei Beispiel 2 verestert und ein viskoses, flüssiges Harz erhalten mit einer Säurezahl von 21 mgKOH/g und einer Viskosität von 9340 mPa.s bei 25 °C und von 1560 mPa.s bei 75 °C.

### Beispiel 4

### Herstellung eines ungesättigten Polyesterharzes (A1-2)

In einem Rührkolben mit Heizung und Rückflußkühler werden 661,10 g Dicyclopentadien (5,0 Mol) und 490,30 g Maleinsäureanhydrid (5,0 Mol) eingewogen. Die Mischung wird unter einem leichten Stickstoffstrom auf 125 °C erhitzt und dann werden über einen Tropftrichter in 1 Stunde 95,00 g Wasser (5,0 Mol + 5 g) zugegeben. Es wird bei 125 °C eine Stunde nachreagieren gelassen. Es bildet sich eine Monocarbonsäure laut Formel (V). Der Kolbeninhalt wird auf 70 "C abgekühlt und dann werden 245,15 g Maleinsäureanhydrid (2,5 Mol), 116,00 g Fumarsäure (1,0 Mol), 272,70 g Neopentylglykol (2,5 Mol), 413,20 g 1,6-Hexandiol (3,5 Mol), 4,00 g Dibutylzinndilaurat (DBTL) und 0,50 g Hydrochinon zugegeben.

Es wird unter einem leichten Stickstoffstrom rasch auf 120 °C aufgeheizt Dann wird in 3 Stunden die Temperatur allmählich auf 190 °C erhöht, das entstehende Kondensationswasser wird abdestilliert. Nach weiteren 3 h wird die Kondensation abgebrochen. Es resultiert ein flüssiges Harz mit einer Säurezahl von 31 mgKOH/g und einer Viskosität von 32350 mPas bei 25 °C.

### Beispiel 5

### Herstellung eines ungesättigten Polyesterharzes (A1-3)

In einem Rührkolben mit Heizung und Rückflußkühler werden 661,10 g Dicyclopentadien (5,0 Mol) und 490,30 g Maleinsäureanhydrid (5,0 Mol) eingewogen. Die Mischung wird unter einem leichten Stickstoffstrom auf 125 °C erhitzt und dann werden über einen Tropftrichter in einer Stunde 95,00 g Wasser (5,0 Mol + 5 g) zugegeben. Es wird bei 125 °C 1 Stunde nachreagieren gelassen.

Es resultiert ein Reaktionsgemisch, das überwiegend eine Monocarbonsäure laut Formel (V) enthält. Der Kolbeninhalt wird auf 70 °C abgekühlt und dann werden 245,15 g Maleinsäureanhydrid (2,5 Mol), 116,00 g Fumarsäure (1,0 Mol), 272,70 g Neopentylglykol (2,5 Mol), 436,60 g 1,6-Hexandiol (3,7 Mol), 4,00 g Dibutylzinndilaurat (DBTL) und 0,50 g Hydrochinon zugegeben.

Es wird unter einem leichten Stickstoffstrom rasch auf 120 °C aufgeheizt. Dann wird in 3 Stunden die Temperatur allmählich auf 190 °C erhöht, das entstehende Kondensationswasser wird abdestilliert. Nach weiteren 3 h wird die Kondensation abgebrochen und der Ansatz auf 70 °C abkühlen gelassen. Es resultiert ein flüssiges Harz mit einer Säurezahl von 18 mgKOH/g und einer Viskosität von 16880 mPas bei 25 °C. In das warme Harz werden 64,40 g Benzophenontetracarbonsäuredianhydrid (0,20 Mol), 70,00 g Gycidylmethacrylat (0,50 Mol) und 10,00 g Triphenylphosphin als Katalysator zugegeben. Die Temperatur wird auf 105 °C erhöht und 2,5 h gehalten. Dann wird abgekühlt. Es resultiert ein flüssiges Harz mit einer Säurezahl von 11 mgKOH/g und einer Viskosität von 53650 mPas bei 25 °C.

### Beispiel 6

### Herstellung eines ungesättigten Polyesterharzes (A1-4)

In einem Rührkolben mit Heizung und Rückflußkühler werden 245,15 g Maleinsäureanhydrid (2,5 Mol), 290,00 g Fumarsäure (2,5 Mol), 272,70 g Neopentylglykol (2,5 Mol), 107,00 g Trimethylolpropanmonoallylether (0,5 Mol), 87,00 g Trimethylolpropandiallylether (0,5 Mol), 206,50 g 1,6-Hexandiol (1,75 Mol), 4,00 g Dibutylzinndilaurat (DBTL) und 0,50 g Hydrochinon eingewogen. Es wird unter einem leichten Stickstoffstrom rasch auf 120 °C aufgeheizt. Dann wird in 3 Stunden die Temperatur allmählich auf 190 °C erhöht, dabei wird das entstehende Kondensationswasser abdestilliert. Nach weiteren 3 h wird die Kondensation abgebrochen. Es resultiert ein flüssiges Harz mit einer Säurezahl von 32 mgKOH/g und einer Viskosität von 36750 mPas bei 25 °C.

### Beispiel 7

### Härtungsversuche

Aus den Stoffen der Beispiele 1 bis 6 werden flüssige, sowohl thermisch als auch mit UV-Licht härtbare Massen (M1 bis M6) hergestellt. Dazu werden die Harzzusammensetzungen in verschließbare Flaschen eingewogen, im Trockenschrank auf ca. 50 °C erwärmt und mit einem Glasstab gemischt. Nach dem Abkühlen werden die Härtungsbeschleuniger dazugegeben, die Flaschen verschlossen und über Nacht auf dem Rollbock homogenisiert. Es resultieren leicht viskose, klare, homogene Harzzubereitungen.

**Tabelle 1:**

| Zusammensetzung und Viskosität der Harzmassen M1 bis M6 | | | | | | |
|---|---|---|---|---|---|---|
| | M1 | M2 | M3 | M4 | M5 | M6 |
| A1-1 | 100 | 100 | - | - | - | - |
| A1-2 | - | - | - | - | 100 | 100 |
| A1-3 | - | - | 100 | - | - | - |
| A1-4 | - | - | 10 | 100 | - | - |
| A3-1 | 20 | - | - | - | - | - |
| A3-2 | - | 15 | 15 | 20 | 20 | - |
| P-490 | 35 | 35 | 35 | 35 | 35 | 35 |
| TBPB | 2 | 2 | 2 | 2 | 2 | 2 |
| BDK | 3 | 3 | - | 3 | 3 | 3 |
| Visk. | 4140 | 2950 | 2680 | 3360 | 2840 | 3070 |
| Erläuterungen zu Tabelle 1: A1-1 bis A1-4 und A3-1 und A3-2 sind die obenbeschriebenen Harze der Beispiele 1 bis 6 P-490 ist ein Versuchsprodukt der Firma BASF AG, Ludwigshafen, ein Polytetrahydrofurandivinylether (Vinylierungsprodukt des Polytetrahydrofurans) mit einer Viskosität von 21 mPa.s bei 25 °C sowie einem mittleren Molekulargewicht von ca. 490 und entspricht der gesetzlichen Definition "polymer" (vgl. Amtsblatt der EU vom 5.6.92, Nr. L 154/3) TBPB ist tert.-Butylperbenzoat (Peroxydkatalysator) BDK ist Benzildimethylketal (Photoinitiator) Visk. ist die Viskosität der Harzmassen M1 bis M6 bei 25 °C in mPa.s | | | | | | |

Von den Harzmassen M1 bis M6 werden je 65 g in Blechdeckel von 60 mm Durchmesser eingefüllt, auf einer thermostatisierten Heizplatte auf 80 °C erwärmt und bei dieser Temperatur mit einer Quecksilberdampflampe für 3 min belichtet. Die Lampe hat ein Strahlungsmaximum bei ca. 360 nm und liefert in Höhe der Probenoberfläche eine Energie von 21 mW/cm². Nach der Belichtung hat sich auf allen Proben eine klebfreie Haut gebildet, unter der sich noch flüssiges Harz befindet. Die Blechdeckel werden dann in einem Trockenschrank 2 Stunden bei 130 °C nachgehärtet. Es resultieren heubräunliche, harte, rißfreie, klare Harzblöcke. Die Harzblöcke werden zurückgewogen zur Bestimmung der Härtungsemissionen. Diese betragen bei allen Proben unter 0,5%.

Eine zweite Probenserie wurde bei 90 °C für 25 min belichtet. Danach waren die Poben vollständig durchgehärtet und die Härtungsemissionen lagen bei allen Proben unter 0,25%.

## Patentansprüche

1. Verwendung einer Harzmasse (A), enthaltend
A1) mindestens ein ungesättigtes Polyesterharz,
A2) mindestens einen oligomeren und/oder polymeren Vinylether mit einer Viskosität von weniger als 4000 mPas bei 25 °C,
A3) ggf. mindestens ein weiteres Polymer und/oder Oligomer,
A4) ggf mindestens einen Härtungsbeschleuniger,
A6) gegebenenfalls weitere übliche Additive, ausgenommen ethylenisch ungesättigte Reaktiwerdünner,
als Tränk-, Verguß- und Überzugsmassen für elektrotechnische und/oder elektronische Bauteile sowie für Trägermaterialien für flächige Isolierstoffe.

2. Verwendung nach Anspruch 1, **dadurch gekennzeichnet, daß** die als Komponente (A1) eingesetzten ungesättigten Polyester als Struktureinheiten Dihydrodicyclopentadien-Einheiten der Formel (I) 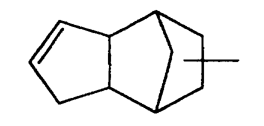 und/oder Oligodihydrodicyclopentadien-Einheiten der Formel (II) 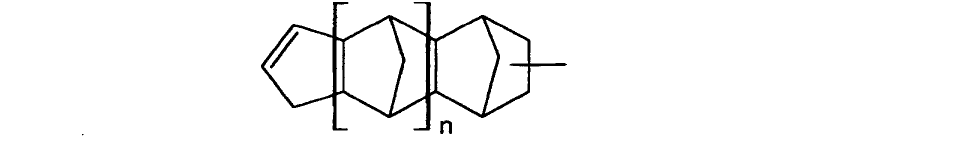 mit n = 1 bis 10
aufweisen.

3. Verwendung nach Anspruch 1 bis 3, **dadurch gekennzeichnet, daß** die Komponente (A3) als Struktureinheiten Dihydrodicyclopentadien-Einheiten der Formel (I) 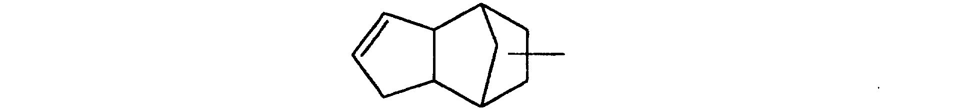 und/oder Oligodihydrodicyclopentadien-Einheiten der Formel (II) 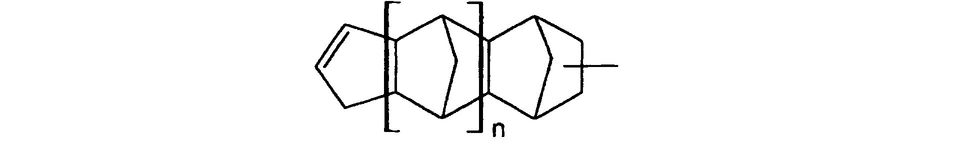 mit n = 1 bis 10 aufweist.

4. Verwendung nach einem der Ansprüche 1 bis 3, **dadurch gekennzeichnet, daß** die als Komponente (A2) eingesetzten Vinylether bei 25 °C eine Viskosität von weniger als 2.000 mPas und/oder einen Dampfdruck bei 25 °C von weniger als 5 mbar und/oder ein zahlenmittleres Molekulargewicht von mehr als 72 bis weniger als 4.000 aufweisen.

5. Verwendung nach einem der Ansprüche 1 bis 4, **dadurch gekennzeichnet, daß** die als Komponente (A2) eingesetzten Vinylether bei 25 °C eine Viskosität von weniger als 100 mPas und/oder einen Dampfdruck bei 25 °C von weniger als 1 mbar, bevorzugt weniger als 0,2 mbar, und/oder ein zahlenmittleres Molekulargewicht von mehr als 250 bis weniger als 2.000, bevorzugt weniger als 1.000, aufweisen.

6. Verwendung nach einem der Ansprüche 1 bis 5, **dadurch gekennzeichnet, daß** in der Komponente (A1) und/oder in der Komponente (A3) die Dihydrodicyclopentadien-Struktureinheiten in Form von Estern des Dihydrodicyclopentadienols gemäß Formel (III) 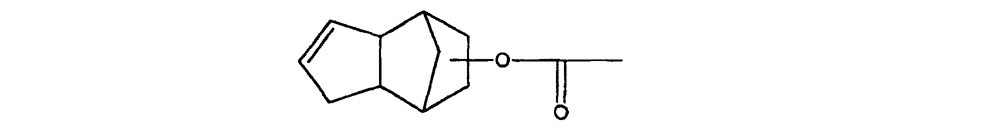 und/oder daß die Oligodihydrodicyclopentadien-Struktureinheiten in Form von Estern des Oligodihydrodicyclopentadienols der Formel (IV) 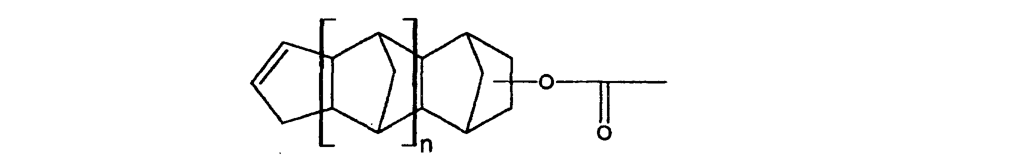 mit n = 1 bis 10 eingebaut sind.

7. Verwendung nach einem der Ansprüche 1 bis 6, **dadurch gekennzeichnet, daß** in der Komponente (A1) und/oder in der Komponente (A3) die Dihydrodicyclopentadien-Struktureinheiten durch Mitverwendung von Verbindungen der Formel (V) und/oder daß die Oligodihydrodicyclopentadien-Struktureinheiten durch 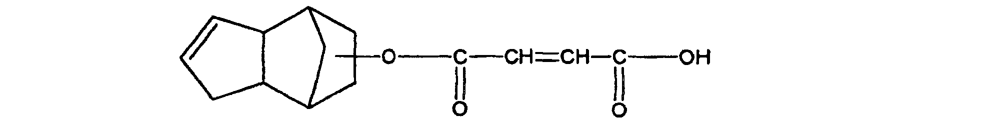 Mitverwendung von Verbindungen der Formel (VI) 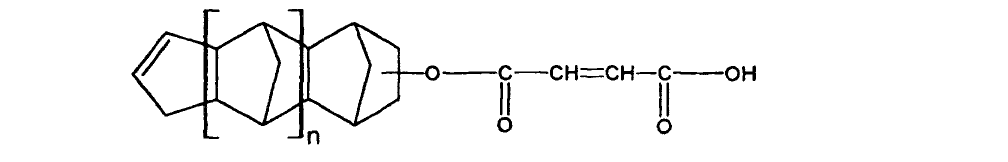 mit n = 1 bis 10 eingebaut worden sind.

8. Verwendung nach einem der Ansprüche 1 bis 7, **dadurch gekennzeichnet, daß** die Harzmasse
A1) 5 bis 95 Gew.-%, bevorzugt 30 bis 80 Gew.-%, besonders bevorzugt 40 bis 70 Gew.-%, der Komponente (A1),
A2) 1 bis 70 Gew.-%, bevorzugt 5 bis 50 Gew.-%, besonders bevorzugt 10 bis 40 Gew.-%, der Komponente (A2),
A3) 1 bis 80 Gew.-%, bevorzugt 3 bis 30 Gew.-%, besonders bevorzugt 5 bis 20 Gew.-%, der Komponente (A3),
A4) 0 bis 10 Gew.-%, bevorzugt 2 bis 5 Gew.-%, der Komponente (A4),
A6) 0 bis 20 Gew.-%, bevorzugt 0,5 bis 10 Gew.-%, der Komponente (A6)
enthält, wobei die Gew.-%-Angaben jeweils auf das Gesamtgewicht der Harzmasse bezogen sind und die Summe der Gewichtsanteile der Komponenten (A1) bis (A6) jeweils 100 Gew.-% beträgt.

9. Verwendung nach einem der Ansprüche 1 bis 8, **dadurch gekennzeichnet, daß** die Komponente (A1) chemisch gebundene Photoinitiatoren enthält, die Xanthon-, Thioxanthon- und/oder Phenonstrukturen aufweisen.

10. Verwendung nach einem der Ansprüche 1 bis 9, **dadurch gekennzeichnet, daß** die Harzmassen mit energiereicher Strahlung, insbesondere mit UV-Strahlung, gehärtet werden, wobei die ggf. erforderlichen Photoinitiatoren entweder in der Harzmasse chemisch gebunden enthalten sind und/oder der Harzmasse zugesetzt wurden.

11. Verwendung nach einem der Ansprüche 1 bis 8, **dadurch gekennzeichnet, daß** die Harzmassen mit Peroxiden mit oder ohne reaktionsbeschleunigende Coinitiatoren bei Raumtemperatur oder erhöhter Temperatur gehärtet werden, ggf. zunächst bis zu einem teilgehärteten B-Zustand, um später vollständig ausgehärtet zu werden.

12. Verwendung nach einem der Ansprüche 9 bis 11, **dadurch gekennzeichnet, daß** die Harzsysteme sowohl thermisch als auch mit energiereicher Strahlung gehärtet werden.

## Claims

1. Use of a resin composition (A) comprising
A1) at least one unsaturated polyester resin,
A2) at least one oligomeric and/or polymeric vinyl ether having a viscosity at 25°C of less than 4000 mPa.s,
A3) if desired, at least one further polymer and/or oligomer,
A4) if desired, at least one curing accelerator,
A6) if desired, further customary additives, excluding ethylenically unsaturated reactive diluents,
as impregnating, casting and coating compositions for electrical and/or electronic components and for carrier materials for sheetlike insulating materials.

2. Use according to Claim 1, **characterized in that** the unsaturated polyesters employed as component (A1) feature, as structural units, dihydrodicyclopentadiene units of the formula (I) 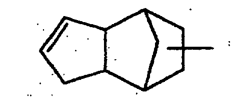 and/or oligodihydrodicyclopentadiene units of the formula (II) 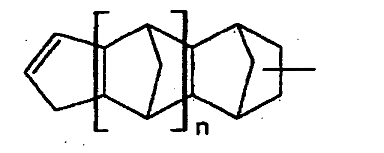 where n = 1 to 10.

3. Use according to Claim 1 to 3, **characterized in that** the component (A3) features, as structural units, dihydrodicyclopentadiene units of the formula (I) 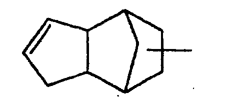 and/or oligodihydrodicyclopentadiene units of the formula (II) 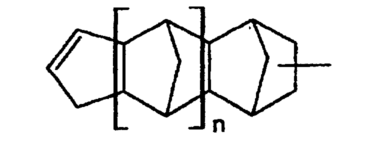 where n = 1 to 10.

4. Use according to one of Claims 1 to 3,
**characterized in that** the vinyl ethers employed as component (A2) have a viscosity at 25°C of less than 2000 mPa.s and/or a vapor pressure at 25°C of less than 5 mbar and/or a number-average molecular weight of from more than 72 to less than 4000.

5. Use according to one of Claims 1 to 4,
**characterized in that** the vinyl ethers employed as component (A2) have a viscosity at 25°C of less than 100 mPa.s and/or a vapor pressure at 25°C of less than 1 mbar, preferably less than 0.2 mbar, and/or a number-average molecular weight of from more than 250 to less than 2000, preferably less than 1000.

6. Use according to one of Claims 1 to 5,
**characterized in that** the dihydrodicyclopentadiene structural units in the component (A1) and/or in the component (A3) have been incorporated in the form of esters of the dihydrodicyclopentadienol as in formula (III) 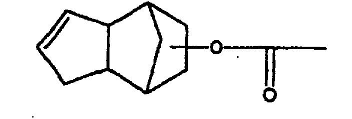 and/or **in that** the oligodihydrodicyclopentadiene structural units have been incorporated in the form of esters of the oligodihydrodicyclopentadienol of formula (IV) 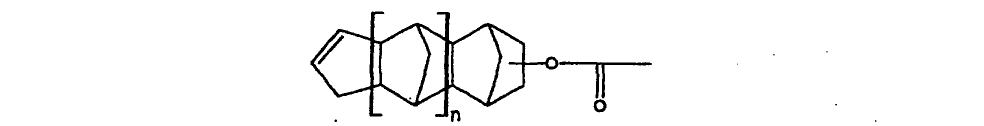 where n = 1 to 10.

7. Use according to one of Claims 1 to 6,
**characterized in that** the dihydrodicyclopentadiene structural units in the component (A1) and/or in the component (A3) have been incorporated by concomitant use of compounds of the formula (V) and/or **in that** the oligodihydrodicyclopentadiene structural units have been incorporated by 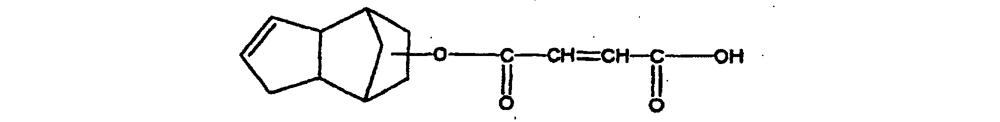 concomitant use of compounds of the formula (VI) 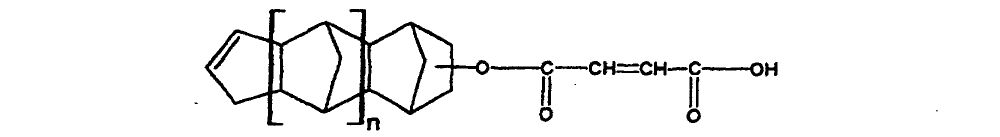 where n = 1 to 10.

8. Use according to one of Claims 1 to 7,
**characterized in that** the resin composition comprises
A1) from 5 to 95% by weight, preferably from 30 to 80% by weight and, with particular preference, from 40 to 70% by weight of component (A1),
A2) from 1 to 70% by weight, preferably from 5 to 50% by weight and, with particular preference, from 10 to 40% by weight of component (A2),
A3) from 1 to 80% by weight, preferably from 3 to 30% by weight and, with particular preference, from 5 to 20% by weight of component (A3),
A4) from 0 to 10% by weight, preferably from 2 to 5% by weight, of component (A4),
A6) from 0 to 20% by weight, preferably from 0.5 to 10% by weight, of component (A6),
the percentages by weight being based in each case on the overall weight of the resin composition, and the sum of the proportions by weight of components (A1) to (A6) being in each case 100% by weight.

9. Use according to Claims 1 to 8, **characterized in that** component (A1) comprises chemically bonded photoinitiators which feature xanthone, thioxanthone and/or phenone structures.

10. Use according to one of Claims 1 to 9,
**characterized in that** the resin compositions are cured with high-energy radiation, especially with UV radiation, the photoinitiators that may be necessary either being present in chemically bonded form in the resin composition and/or having been added to the resin composition.

11. Use according to one of Claims 1 to 8,
**characterized in that** the resin compositions are cured with peroxides, with or without reaction-accelerating co-initiators, at room temperature or at elevated temperature, possibly first of all up to a partially cured B-stage, before being cured to completion later on.

12. Use according to one of Claims 9 to 11, **characterized in that** the resin systems are cured both thermally and with high-energy radiation.

## Revendications

1. Utilisation d'une matière de type résine (A) contenant
A1) au moins une résine polyester insaturée,
A2) au moins un éther vinylique oligomère et/ou polymère ayant une viscosité de moins de 4 000 mPa.s à 25°C,
A3) éventuellement au moins un autre polymère et/ou oligomère,
A4) éventuellement au moins un accélérateur de durcissement,
A6) éventuellement d'autres additifs usuels, à l'exception de diluants réactifs à insaturation éthylénique.
en tant que matières d'imprégnation, de coulée et de revêtement pour des composants électrotechniques et/ou électroniques ainsi que pour de matériaux de support pour isolants plans.

2. Utilisation selon la revendication 1, **caractérisée en ce que** les polyesters insaturés, utilisés en tant que composant (A1), comportent en tant que motifs structuraux des motifs dihydrodicyclopentadiène de formule (I) 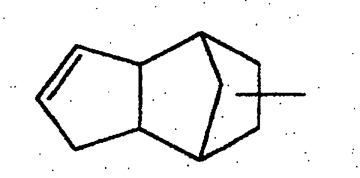 et/ou des motifs oligodihydrodicyclopentadiène de formula (II) 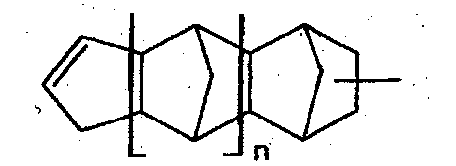 où n = 1 à 10.

3. Utilisation selon l'une quelconque des revendications 1 à 3, **caractérisée en ce que** le composant (A3) comporte en tant que motifs structuraux des motifs dihydrodicyclopentadiène de formule (I) 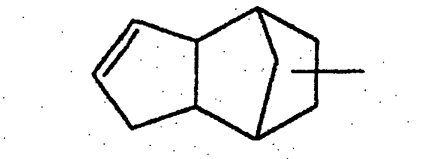 et/ou des motifs oligodihydrodicyclopentadiène de formule (II) 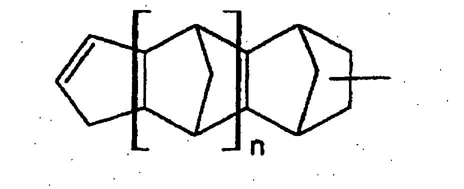 où n = 1 à 10.

4. Utilisation selon l'une quelconque des revendications 1 à 3, **caractérisée en ce que** les éthers vinyliques utilisés en tant que composant (A2) ont à 25°C une viscosité de moins de 2 000 mPa.s et/ou une tension de vapeur à 25°C de moins de 5 mbars et/ou une masse moléculaire moyenne en nombre de plus de 72 à moins de 4 000.

5. Utilisation selon l'une quelconque des revendications 1 à 4, **caractérisée en ce que** les éthers vinyliques utilisés en tant que composant (A2) ont à 25°C une viscosité de moins de 100 mPa.s et/ou une tension de vapeur à 25°C de moins de 1 mbar, de préférence de moins de 0,2 mbar, et/ou une masse moléculaire moyenne en nombre de plus de 250 à moins de 2 000, de préférence de moins de 1 000.

6. Utilisation selon l'une quelconque des revendications 1 à 5, **caractérisée en ce que** dans le composant (A1) et/ou dans le composant (A3) les motifs structuraux dihydrodicyclopentadiène sont incorporés sous forme d'esters du dihydrodicyclopentadiénol de formule (III) 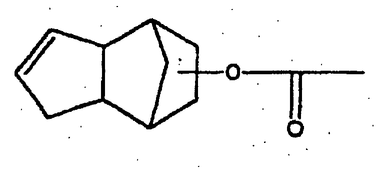 et/ou **en ce que** les motifs structuraux oligodihydrodicyclopentadiène sont incorporés sous forme d'esters de l'oligodihydrodicyclopentadiénol de formule (IV) 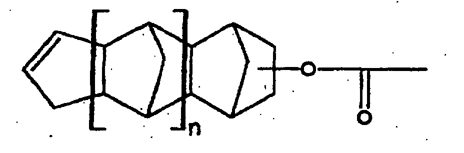 où n = 1 à 10.

7. Utilisation selon l'une quelconque des revendications 1 à 6, **caractérisée en ce que** dans le composant (A1) et/ou dans le composant (A3) les motifs structuraux dihydrodicyclopentadiène ont été incorporés par utilisation simultanée de composés de formule (V) 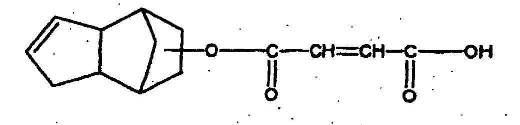 et/ou **en ce que** les motifs oligodihydrodicyclopentadiène ont été incorporés par utilisation simultanée de composés de formule (VI)

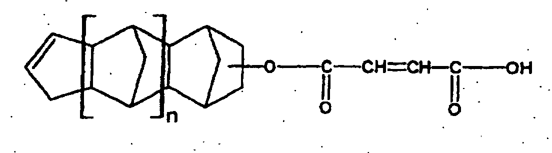

8. Utilisation selon l'une quelconque des revendications 1 à 7, **caractérisée en ce que** la matière de type résine contient
A1) 5 à 95 % en poids, de préférence 30 à 80 % en poids, de façon particulièrement préférée 40 à 70 % en poids, du composant (A1),
A2) 1 à 70 % en poids, de préférence 5 à 50 % en poids, de façon particulièrement préférée 10 à 40 % en poids, du composant (A2),
A3) 1 à 80 % en poids, de préférence 3 à 30 % en poids, de façon particulièrement préférée 5 à 20 % en poids, du composant (A3),
A4) 0 à 10 % en poids, de préférence 2 à 5 % en poids, du composant (A4),
A6) 0 à 20 % en poids, de préférence 0,5 à 10 % en poids, du composant (A6),
les pourcentages en poids étant chacun par rapport au poids total de la matière de type résine, et la somme des proportions en poids des composants (A1) à (A6) étant dans chaque cas 100 % en poids.

9. Utilisation selon l'une quelconque des revendications 1 à 8, **caractérisée en ce que** le composant (A1) contient des photoamorceurs chimiquement liés qui présentent des structures xanthone, thioxanthone et/ou phénone.

10. Utilisation selon l'une quelconque des revendications 1 à 9, **caractérisée en ce que** les matières de type résine sont durcies à l'aide d'un rayonnement à haute énergie, en particulier à l'aide d'un rayonnement UV, les photoamorceurs éventuellement requis soit étant contenus chimiquement liés dans la matière de type résine, soit/et ayant été ajoutés à la matière de type résine.

11. Utilisation selon l'une quelconque des revendications 1 à 8, **caractérisée en ce que** les matières de type résine sont durcies à l'aide de peroxydes avec ou sans co-amorceurs accélérant la réaction, à la température ambiante ou à une température élevée, éventuellement d'abord jusqu'à un état B partiellement durci, pour être totalement durcies à coeur ultérieurement.

12. Utilisation selon l'une quelconque des revendications 9 à 11, **caractérisée en ce que** les systèmes de résines sont durcis aussi bien thermiquement qu'à l'aide d'un rayonnement à haute énergie.
